# EUROPÄISCHE PATENTSCHRIFT

(11) **EP 0 596 220 B1**
(45) Veröffentlichungstag und Bekanntmachung des Hinweises auf die Patenterteilung: **27.03.1996**
(21) Anmeldenummer: 93114557.7
(22) Anmeldetag: 10.09.1993
(51) Int. Cl.: F16L 55/027, F16L 55/033, B60T 17/00

(54) **Druckluft-Entlüftungseinrichtung**
Compressed air and venting system
Dispositif d'air comprimé et de ventilation

(30) Priorität: 05.11.1992 DE 4237630
(43) Veröffentlichungstag der Anmeldung: 11.05.1994
(73) Patentinhaber: WABCO STANDARD GmbH, D-53008 Bonn (DE)
(72) Erfinder: Schulz, Hans-Joachim, D-30900 Wedemark (DE); Wolff, Hans-Klaus, D-31832 Springe (DE)
(74) Vertreter: Schrödter, Manfred, Dipl.-Ing.

(56) Entgegenhaltungen:
- EP-A- 0 132 696
- EP-A- 0 359 948
- EP-A- 0 379 160

## Beschreibung

Die Erfindung betrifft eine Druckluft-Entlüftungseinrichtung gemäß dem Oberbegriff des Patentanspruchs 1 bzw. des Patentanspruchs 2.

Eine derartige Druckluft-Entlüftungseinrichtung ist aus der EP-A-0 359 948 bekannt.

Die bekannte Druckluft-Entlüftungseinrichtung besteht im wesentlichen aus einem Gehäuse mit einem Einlaß und einem Auslaß für Druckluft sowie im Gehäuseinnenraum zwischen dem Einlaß und dem Auslaß angeordneten geräuschdämpfenden Mitteln.

Um zu verhindern, daß sich im Gehäuseinnenraum ein zu hoher Staudruck bildet, wenn nach längerer Betriebszeit die Druckluftdurchlässigkeit der geräuschdämpfenden Mittel nachläßt, z. B. durch gefrierendes Kondensat oder durch Ablagerung von Ölkohle, ist parallel zu einem über die geräuschdämpfenden Mittel zum Auslaß geführten Hauptluftweg ein Hilfsluftweg vorgesehen, der als ein die geräuschdämpfenden Mittel in Längsrichtung durchdringender Kanal ausgebildet ist, durch welchen die Druckluft vom Einlaß direkt zum Auslaß strömen kann.

In der Nähe des Einlasses ist in der Gehäusewand des bekannten Geräuschdämpfers eine Sollbruchstelle angeordnet, die bei Auftreten von übermäßig hohem Staudruck einen Durchlaß für die im Gehäuse des Geräuschdämpfers sich aufstauende Druckluft freigibt. Derartig hoher Staudruck kann sich jedoch nur dann bilden, wenn das geräuschdämpfende Material sich zugesetzt hat und zusätzlich der Hilfsluftweg verstopft ist.

Die Geräuschdämpfung bei einer derartigen Druckluft-Entlüftungseinrichtung ist, bedingt durch den auch als Notpassage bezeichneten Kanal, nicht so optimal wie bei Druckluft-Entlüftungseinrichtungen, die eine solche Notpassage nicht aufweisen.

Aus der EP-A-0 132 696 ist ein Geräuschdämpfer bekannt, der einen vom Einlaß über geräuschdämpfende Mittel zu einem ersten Auslaß geführten Hauptluftweg und einen vom Einlaß zu einem zweiten Auslaß führenden Nebenluftweg aufweist, wobei der Nebenluftweg die geräuschdämpfenden Mittel umgeht.

Sowohl beim Geräuschdämpfer gemäß der EP-A-0 359 948 als auch beim Geräuschdämpfer gemäß der EP-A-0 132 696 verbindet der Hilfsluftweg bzw. der Nebenluftweg den Einlaß des Geräuschdämpfers unter Umgehung der geräuschdämpfenden Mittel direkt mit der Atmosphäre.

Der Erfindung liegt deshalb die Aufgabe zugrunde, eine Druckluft-Entlüftungseinrichtung der eingangs erwähnten Art zu schaffen, mit der eine gute Geräuschdämpfung erzielt und eine übermäßig hohe Staudruckbildung verhindert wird.

Diese Aufgabe wird mit der im Patentanspruch 1 bzw. Patentanspruch 2 angegebenen Erfindung gelöst. Weiterbildungen und vorteilhafte Ausgestaltungen der Erfindung sind in den Unteransprüchen angegeben.

Die Erfindung bietet insbesondere den Vorteil, eine sehr gute Geräuschdämpfung zu erzielen, da im Normalbetrieb (geräuschdämpfende Mittel sind nicht verunreinigt) zwischen dem Einlaß und dem zur Atmosphäre hin führenden Auslaß keine direkte Verbindung besteht. Die in den Gehäuseinnenraum einströmende Druckluft wird über einen Hauptluftweg und einen Hilfsluftweg durch die geräuschdämpfenden Mittel hindurch zum Auslaß der Druckluft-Entlüftungseinrichtung geführt. Eine direkte Verbindung vom Gehäuseinnenraum zur Atmosphäre hin entsteht nur dann, wenn die Druckluftdurchlässigkeit der geräuschdämpfenden Mittel, bedingt durch gefrierendes Kondensat oder durch Ablagerung von Ölkohle, nachläßt und der dadurch im Gehäuseinnenraum entstehende Staudruck ein begrenztes Stück der Gehäusewand aus dieser herausdrückt oder einen Teilbereich der geräuschdämpfenden Mittel elastisch oder plastisch derart verformt, daß ein erster Teilkanal und ein zweiter Teilkanal des Hilfluftweges miteinander verbunden werden.

Gemäß einer vorteilhaften Weiterbildung des Erfindungsgegenstandes ist auf der den geräuschdämpfenden Mitteln zugewandten Seite des Gehäuses ein den Einlaß umgebender ringförmiger Vorsprung vorgesehen, an den quer zur Längsachse des Gehäuses verlaufende Rippen anschließen, welche einen mit dem Einlaß verbundenen Teilkanal des Hilfsluftweges begrenzen. Der ringförmige Vorsprung weist einen Durchlaß auf, welcher Bestandteil des Teilkanals ist und über welchen der Teilkanal mit dem Einlaß verbunden ist. Die durch den Einlaß in den Gehäuseinnenraum strömende Druckluft gelangt teils direkt durch die geräuschdämpfenden Mittel zum Auslaß (Hauptluftweg) und wird teils von dem im ringförmigen Vorsprung vorgesehenen Durchlaß umgelenkt und in den quer zur Längsachse des Gehäuses verlaufenden Teilkanal eingeleitet, von welchem aus die Druckluft in einen sich in Richtung der Längsachse des Gehäuses erstreckenden Raum gelangt, der von einem Teil der geräuschdämpfenden Mittel begrenzt wird. Durch die geräuschdämpfenden Mittel gelangt dieser Anteil der Druckluft dann zum Auslaß (zweiter Teilkanal des Hilfsluftweges).

Anhand der Zeichnung werden nachfolgend zwei Ausführungsbeispiele der Erfindung näher erläutert.

Es zeigen:
- Figur 1: eine Druckluft-Entlüftungseinrichtung mit einem vom Einlaß ausgehenden ersten Teilkanal und einem vom Auslaß gebildeten zweiten Teilkanal, wobei die beiden Teilkanäle über die geräuschdämpfenden Mittel miteinander verbunden sind;
- Figur 2: die dem Gehäuseinnenraum zugewandte Seite des als Deckel ausgebildeten Teiles des Gehäuses und
- Figur 3: eine Druckluft-Entlüftungseinrichtung, welche eine im Deckel vorgesehene Sollbruchstelle aufweist.

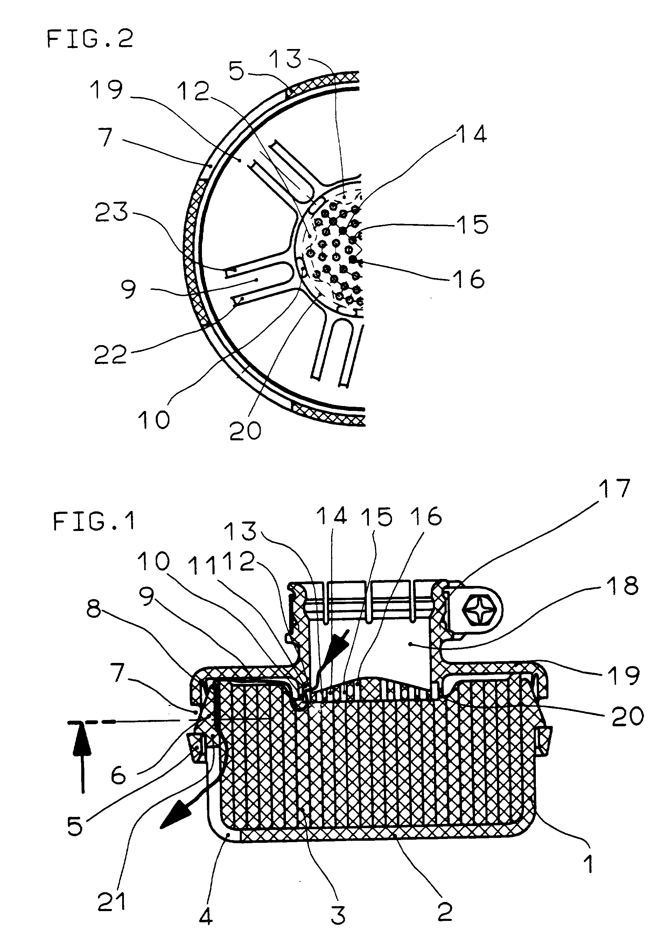

Die als Geräuschdämpfer dienende Druckluft-Entlüftungseinrichtung gemäß Figur 1 besteht im wesentlichen aus einem Gehäuse (1, 2, 19, 17, 5) mit einem Einlaß (18) für Druckluft und einem Auslaß (4). Das Gehäuse (1, 2, 19, 17, 5) setzt sich aus einem topfförmig ausgebildeten Gehäuseteil (1, 2) und einem auf dieses aufgeschnappten, als Deckel (19, 17, 5) ausgebildeten Gehäuseteil zusammen. Das topfförmige Gehäuseteil (1, 2) weist auf seinem Umfang sich nach außen erstreckende nasenförmige Vorsprünge (6) auf. Die nasenförmigen Vorsprünge (6) greifen in Ausnehmungen (7) ein, die in dem den freien Endbereich des topfförmigen Gehäuseteiles (1, 2) übergreifenden Rand (5) des Deckels (19, 17, 5) vorgesehen sind. Der im Deckel (19, 17, 5) vorgesehene Einlaß (18) wird von einem Anschlußstutzen (17) begrenzt, der an den Deckel (19, 17, 5) angeformt ist und sich vom Deckel (19, 17, 5) weg nach außen erstreckt. Der aus mehreren in der Wand (1) des topfförmigen Gehäuseteiles (1, 2) vorgesehenen Schlitzen bestehende Auslaß (4) erstreckt sich bis in den abgerundeten Übergangsbereich von der Wand (1) zum Bodenteil (2) des topfförmigen Gehäuseteiles (1, 2) hin. Der Auslaß (4) verläuft im wesentlichen quer zur Längsachse des Gehäuses (1, 2, 19, 17, 5).

Im Gehäuse (1, 2, 19, 17, 5) sind von einem Filtergestrick (3) gebildete geräuschdämpfende Mittel vorgesehen. Das Filtergestrick (3) besteht aus einem strumpfartigen Gewebeteil aus Kunststoff-Flachdraht, welches zu einer Rolle gewickelt ist. Die aus dem Filtergestrick (3) bestehenden geräuschdämpfenden Mittel sind so bemessen, daß sie an der Wand (1) und am Bodenteil (2) des topfförmigen Gehäuseteiles (1, 2) anliegen.

Auf der dem Filtergestrick (3) zugewandten Seite des Deckels (19, 17, 5) ist in Verlängerung des Anschlußstutzens (17) ein sich in Richtung auf das Filtergestrick (3) zuerstreckender ringförmiger Vorsprung (20) am Deckel (19, 17, 5) vorgesehen. Von dem Vorsprung (20) ausgehend erstrecken sich fingerartige Rippen quer zur Längsachse des Gehäuses (1, 2, 19, 17, 5) verlaufend nach außen, in Richtung auf den Rand (5) des Deckels (19, 17, 5) zu. Der ringförmige Vorsprung (20) und die Rippen liegen an dem Filtergestrick (3) an. Von der dem Deckel (19, 17, 5) zugewandten Seite des Filtergestricks (3), dem Deckel (19, 17, 5) und den einander zugewandten Seiten der Rippen werden Kanäle (9) begrenzt. In der dem Filtergestrick (3) zugewandten Seite des ringförmigen Vorsprungs (20) sind als Durchlässe für Druckluft dienende Ausnehmungen (10) vorgesehen, die an die Kanäle (9) anschließen.

Ein sich in Richtung auf den Anschlußstutzen (17) zu kegelförmig verjüngendes Teil (13) ist in dem von dem ringförmigen Vorsprung (20) begrenzten Bereich des Einlasses (18) vorgesehen und einstückig mit dem ringförmigen Vorsprung (20) des Deckels (19, 17, 5) ausgebildet. Das kegelförmige Teil (13) ist von einer Vielzahl von in Richtung der Längsachse des Gehäuses (1, 2, 19, 17, 5) verlaufenden Durchlässen (14, 15, 16) durchsetzt. Das kegelförmige Teil (13) ist so im ringförmigen Vorsprung (20) angeordnet, daß es mit seiner dem Filtergestrick zugewandten Seite am Filtergestrick (3) anliegt.

In der der äußeren Oberfläche des Filtergestricks (3) zugewandten Seite der im wesentlichen parallel zur Längsachse des Gehäuses verlaufenden Wand (1) des topfförmigen Gehäuseteiles (1, 2) sind von Ausnehmungen in der Wand (1) gebildete Kammern (8) vorgesehen, die auf ihrer dem Filtergestrick (3) zugewandten Seite von der äußeren Oberfläche des Filtergestricks (3) begrenzt werden. Sie erstrecken sich in Richtung der Längsachse des Gehäuses (1, 2, 19, 17, 5) nur über einen Teilbereich der geräuschdämpfenden Mittel. Die Kammern (8) sind um den Umfang des Filtergestricks (3) herum im gleichen Abstand zueinander in der Wand (1) des topfförmigen Gehäuseteiles (1, 2) angeordnet. Die Kammern (8) sind über die Kanäle (9), die Durchlässe (10) sowie an die Durchlässe (10) anschließende, im ringförmigen Vorsprung (20) vorgesehene Ausnehmungen (11, 12) mit dem Einlaß (18) verbunden. Die Ausnehmungen (11, 12) sind in der dem Einlaß (18) zugewandten Seite des ringförmigen Vorsprungs (20) und der dem Einlaß (18) abgewandten Seite des ringförmigen Vorsprungs (20) angeordnet. Sie verlaufen schräg zur Längsachse des Gehäuses (1, 2, 19, 17, 5) in Richtung auf den Gehäuseinnenraum zu aufeinander zu.

Je ein Durchlaß (10) bildet mit einem ihm zugeordneten Kanal (9) und einer Kammer (8) einen ersten Teilkanal (10, 9, 8) und der in der Wand des Gehäuses (1, 2, 19, 17, 5) vorgesehene, aus einem Schlitz oder aus mehreren Schlitzen bestehende Auslaß (4) bildet einen zweiten Teilkanal (4) eines Hilfsluftweges (10, 9, 8, 4). Der erste Teilkanal (10, 9, 8) und der zweite Teilkanal (4) sind nicht mit den geräuschdämpfenden Mitteln (3) gefüllt.

Das Filtergestrick (3) liegt mit einem Teil seiner äußeren Oberfläche an einem zwischen dem ersten Teilkanal (10, 9, 8) und dem zweiten Teilkanal (4) befindlichen Teil (21) der Wand (1) des Gehäuses (1, 2, 19, 17, 5) an, so daß der erste Teilkanal (10, 9, 8) über das Filtergestrick (3) mit dem zweiten Teilkanal (4) verbunden ist.

Der Kanal (9) kann von an dem Deckel (19, 17, 5) angeformten Rippen begrenzt werden, er kann jedoch auch von einer im Deckel (19, 17, 5) vorgesehenen nutartigen Ausnehmung gebildet werden. In letztgenannter Ausführung kann auf den den Einlaß (18) begrenzenden ringförmigen Vorsprung (20) verzichtet werden. Die schräg zur Längsachse verlaufenden Ausnehmungen (11, 12) werden in einem solchen Fall auf der dem Einlaß (18) zugewandten Seite und der dem Kanal (9) zugewandten Seite der den Einlaß (18) begrenzenden Wand angeordnet. Der Durchlaß (10) ist dann in der den Einlaß (18) begrenzenden Wand auf der dem Filtergestrick (3) zugewandten Seite so anzuordnen, daß die beiden Ausnehmungen (11 und 12) an den Durchlaß (10) anschließen.

Selbstverständlich ist es auch möglich, den Kanal (9) als einen koaxial zum Einlaß (18) im Deckel (19, 17, 5) angeordneten Ringkanal auszubilden. Ebenso kann die Kammer (8) als eine in der Wand (1) des Gehäuses (1, 2, 19, 17, 5) angeordnete, das Filtergestrick (3) umgebende Ringkammer ausgebildet sein, wobei die Ringkammer einerseits von der der äußeren Oberfläche des Filtergestricks (3) zugewandten Seite der Wand des Gehäuses und andererseits von der dieser Wand des Gehäuses zugewandten äußeren Oberfläche des Filtergestricks (3) begrenzt wird.

In Figur 2 ist die dem topfförmigen Gehäuseteil (1, 2) zugewandte Seite des Deckels (19, 17, 5) dargestellt.

Wie bereits erwähnt, weist der Deckel (19, 17, 5) auf seiner dem topfförmigen Gehäuseteil (1, 2) zugewandten Seite einen ringförmigen Vorsprung (20) auf, welcher den Einlaß begrenzt. Im ringförmigen Vorsprung (20) ist ein sich in den Einlaß hineinerstreckendes kegelförmiges Teil (13) angeordnet, welches in Richtung der Längsachse des Gehäuses (1, 2, 19, 17, 5) verlaufende Durchlässe (14, 15, 16) aufweist.

Der ringförmige Vorsprung (20) weist auf seiner dem Filtergestrick (3) zugewandten Seite vorzugsweise mehrere im gleichen Abstand zueinander angeordnet Durchlässe (10) auf, an welche ebenfalls am ringförmigen Vorsprung (20) vorgesehene Ausnehmungen (11, 12) anschließen. Vom ringförmigen Vorsprung (20) ausgehend erstrecken sich an der Innnenseite des Deckels (19, 17, 5) angeformte Rippen (22, 23) in Richtung auf den Rand (5) des Deckels (19, 17, 5) zu. In ihrer radialen Erstreckung sind die Rippen (22, 23) so bemessen, daß sie bis dicht an die Kammern (8) in der Wand (1) des topfförmigen Gehäuseteiles (1, 2) heranreichen. Vom Deckel (19, 17, 5), den einander zugewandten Seiten der Rippen (22, 23) sowie der dem Deckel (19, 17, 5) zugewandten Seite des Filtergestricks (3) werden die Kanäle (9) begrenzt.

Im Rand (5) des Deckels (19, 17, 5) sind Ausnehmungen (7) vorgesehen, in welche an dem Umfang des topfförmigen Gehäuseteiles (1, 2) vorgesehene nasenförmige Vorsprünge (6) eingreifen. Die nasenförmige Vorsprünge (6) des topfförmigen Gehäuseteiles (1, 2) und die im Rand (5) des Deckels (19, 17, 5) vorgesehenen Ausnehmungen (7) wirken nach Art einer Schnappverbindung zusammen.

Die Funktion der vorstehend beschriebenen Druckluft-Entlüftungseinrichtung wird nachfolgend näher erläutert.

Es wird angenommen, daß die als Geräuschdämpfer dienende Druckluft-Entlüftungseinrichtung am Auslaßstutzen einer Ventileinrichtung befestigt ist.

Öffnet das Auslaßventil der Ventileinrichtung, so strömt vom Auslaßventil kommende Druckluft in den Einlaß (18) der Druckluft-Entlüftungseinrichtung. Die Druckluft gelangt durch die Durchlässe (14, 15, 16) in den Innenraum des Gehäuses (1, 2, 19, 17, 5) und weiter durch das Filtergestrick (3) und den Auslaß (4), welche einen Hauptluftweg für die Druckluft bilden, zur Atmosphäre hin. Gleichzeitig gelangt die Druckluft vom Einlaß (18) durch die Durchlässe (10) in den ersten Teilkanal, der sich aus den mit den Durchlässen (10) verbundenen Kanälen (9) und den Kammern (8) zusammensetzt.

Durch die an die Durchlässe (10) angrenzenden,von Schrägflächen begrenzten Ausnehmungen (12) wird Druckluft aus dem Einlaß (18) zu den Durchlässen (10) hin gelenkt. Die auf der Seite der Kanäle (9) im ringförmigen Vorsprung (20) vorgesehenen, von Schrägflächen begrenzten Ausnehmungen (11) lenken die vom Einlaß (18) kommende Druckluft in Richtung auf die dem Filtergestrick (3) gegenüberliegende Wand des Deckels (19, 17, 5) zu um. Die Druckluft wird zum Teil von dieser Wand in Richtung auf das Filtergestrick (3) zu reflektiert (Prinzip Prallplatte) und zum Teil in die Kammern (8) umgelenkt.

Die so umgelenkte Druckluft in den Kammern (8) tritt jetzt quer zur Längsachse des Filtergestricks (3) durch einen Teilbereich der äußeren Oberfläche des Filtergestricks (3) in das Filtergestrick (3) ein. Vom Filtergestrick (3) gelangt die Druckluft zum Auslaß (4), welcher den zweiten Teilkanal des Hilfsluftweges bildet.

Da die mittels des parallel zu dem Hauptluftweg angeordneten, aus den Durchlässen (10), den Kanälen (9) und den Kammern (8) bestehenden Hilfsluftweges in der beschriebenen Weise umgelenkte Druckluft nicht direkt zur Atmosphäre hin sondern durch das Filtergestrick (3) hindurch zum Auslaß (4) geführt wird, wird der Geräuschpegel der aus der Druckluft-Entlüftungseinrichtung austretenden Druckluft erheblich gesenkt.

Ist das Filtergestrick 3, z. B. durch Ölkohle oder durch gefrorenes Kondensat, zugesetzt, so strömt der überwiegende Teil der von der Ventileinrichtung kommenden Druckluft durch den Einlaß (18) und die als Notpassagen dienenden Kanäle (10, 9) in die Kammern (8). Durch den sich in den Kammern (8) aufbauenden Staudruck wird das Filtergestrick (3) in der Weise elastisch verformt, daß der Teil der äußeren Oberfläche des Filtergestricks (3), welcher an dem zwischen dem ersten Teilkanal (10, 9, 8) und dem zweiten Teilkanal (4) des Hilfsluftweges (10, 9, 8, 4) gelegenen Teil (21) der Wand (1) des Gehäuses (1, 2, 19, 17, 5) anliegt, vom Teil (21) der Wand (1) abgehoben wird. Der erste Teilkanal (10, 9, 8) und der zweite Teilkanal (4) sind jetzt direkt miteinander verbunden, so daß die Druckluft nicht mehr über den den ersten Teilkanal (10, 9, 8) mit dem zweiten Teilkanal (4) verbindenden Teil des Filtergestricks (3) sondern über die direkte Verbindung der beiden Teilkanäle (10, 9, 8, 4) zur Atmosphäre hin gelangt. Die Druckluftentlüftungseinrichtung bleibt somit auch dann noch beschränkt funktionsfähig, wenn das Filtergestrick (3) verunreinigt ist.

Im Gehäuse (1, 2, 19, 17, 5) kann ein aus einem Durchlaß (10), einem Kanal (9), einer Kammer (8) und einem Auslaß (4) bestehender Hilfsluftweg (10, 9, 8, 4) vorgesehen werden. Günstiger ist es jedoch mehrere Durchlässe (10), mehrere Kanäle (9), mehrere Kammern (8) und mehrere Auslaßöffnungen (4) vorzusehen. Anstelle einer Mehrzahl von Kammern (8) vorzusehen, kann im Gehäuse (1, 2, 19, 17, 5) auch ein Ringraum angeordnet werden, welcher von der äußeren Oberfläche des Filtergestricks (3) und einem Teilbereich der der äußeren Oberfläche des Filtergestricks (3) zugewandten Wand des topfförmigen Gehäuseteiles (1, 2) begrenzt wird.

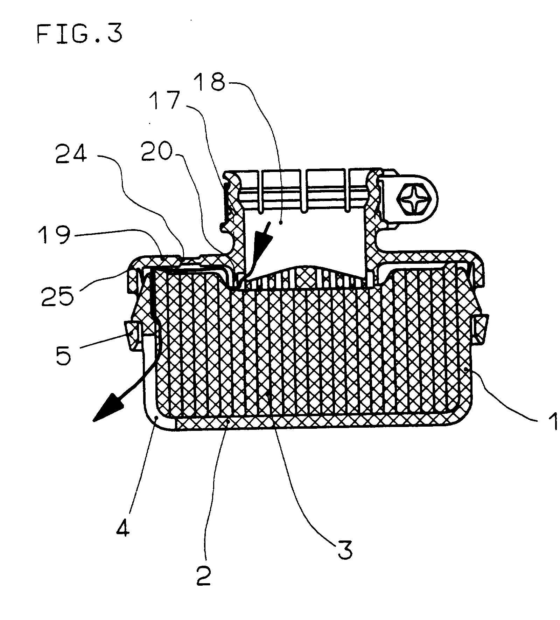

Wie in Figur 3 dargestellt, ist es auch möglich, auf die Kammer (8) zu verzichten. Anstelle dieser Kammer (8) wird ein zur Atmosphäre hin gegen eine Rückstellkraft in die Offenstellung bringbares Ventil am Deckel (19, 17, 5) oder an der Wand (1) des Gehäuses (1, 2, 19, 17, 5) angeordnet. Ebenso ist es möglich, in der Wand (1) oder im Deckel (19, 17, 5) des Gehäuses (1, 2, 19, 17, 5) eine Sollbruchstelle (24) vorzusehen oder die umlaufende Dichtlippe (25) als Sollbruchstelle auszulegen.

Die Druckluft-Entlüftungseinrichtung gemäß Figur 3 ist im wesentlichen genauso aufgebaut wie die Druckluft-Entlüftungseinrichtung gemäß Figur 1. Der besseren Übersicht halber sind die den in Figur 1 gezeigten Bauteilen gleichen Bauteile mit gleichen Bezugsziffern versehen.

Die in Figur 3 gezeigte Druckluft-Entlüftungseinrichtung besteht aus einem topfförmig ausgebildeten Gehäuseteil (1, 2) und aus einem deckelartigen zweiten Gehäuseteil (19, 17, 5), wobei im Innenraum des so gebildeten Gehäuses (1, 2, 19, 17, 5) ein Filtergestrick (3) zwischen dem Einlaß (18), und dem Auslaß (4) angeordnet ist.

In der Wand des deckelartigen Teiles (15, 17, 5) ist eine Sollbruchstelle (24) vorgesehen. Die vom Einlaß (18) kommende Druckluft gelangt sowohl über die von dem ringförmigen Vorsprung (20) begrenzte äußere Oberfläche des Filtergestricks (3) (Hauptluftweg) als auch über den von den Durchlässen (10) und den Kanälen (9) begrenzten Bereich der äußeren Oberfläche des Filtergestricks (3) (Hilfsluftweg) in das Filtergestrick (3), entspannt sich dort und gelangt vom Filtergestrick (3) durch den Auslaß (4) zur Atmosphäre.

Hat sich das Filtergestrick (3) zugesetzt, so wird durch die Kraft des sich im Gehäuseinnenraum aufbauenden Druckes ein begrenztes Stück (24) der Wand des Gehäuses (1, 2, 19, 17, 5) aus der Gehäusewand herausgedrückt. Die im Gehäuseinnenraum befindliche Druckluft entweicht durch die so geschaffene Öffnung zur Atmosphäre hin.

Auf die vorstehend beschriebene Art und Weise wird verhindert, daß sich ein zu hoher Staudruck im Gehäuseinnenraum aufbauen kann, welcher zu Schäden an den zu entlüftenden Geräten oder an der Druckluft-Entlüftungseinrichtung führen könnte.

Das Gehäuse (1, 2, 19, 17, 5) der beschriebenen Druckluft-Entlüftungseinrichtung ist gemäß den Ausführungsbeispielen zylindrisch ausgebildet. Es ist selbstverständlich nicht an diese Form gebunden sondern kann auch jede beliebige andere Form, wie z. B. mehreckig, kegelig oder oval haben.

Vorzugsweise besteht das Gehäuse (1, 2, 19, 17, 5) aus Kunststoff. Selbstverständlich ist es auch möglich, das Gehäuse aus anderen Materialien, wie z. B. Metall herzustellen. Die geräuschdämpfenden Mittel können sowohl aus einem elastisch verformbaren als auch aus einem plastisch verformbaren Metall- oder Kunststoffmaterial bestehen.

## Patentansprüche

1. Druckluft-Entlüftungseinrichtung mit folgenden Merkmalen:
a) es ist ein Gehäuse (1, 2, 19, 17, 5) mit einem Einlaß (18) und einem Auslaß (4) vorgesehen;
b) im Gehäuse (1, 2, 19, 17, 5) sind geräuschdämpfende Mittel (3) vorgesehen;
c) die geräuschdämpfenden Mittel (3) sind zwischen dem Einlaß (18) und dem Auslaß (4) im Gehäuse (1, 2, 19, 17, 5) angeordnet;
d) parallel zu einem vom Einlaß (18) über die geräuschdämpfenden Mittel (3) zum Auslaß (4) geführten Hauptluftweg ist ein Hilfsluftweg (10, 9, 8, 4) vorgesehen;
e) der Hilfsluftweg (10, 9, 8, 4) besteht aus einem vom Einlaß (18) ausgehenden ersten Teilkanal (10, 9, 8) und einem vom Auslaß (4) gebildeten oder zum Auslaß (4) führenden zweiten Teilkanal (4);
f) die beiden Teilkanäle (10, 9, 8, 4) sind nicht mit den geräuschdämpfenden Mitteln (3) gefüllt;
gekennzeichnet durch die folgenden Merkmale:
g) die beiden Teilkanäle (10, 9, 8, 4) sind miteinander ausschließlich im Normalbetrieb, d.h. wenn die geräuschdämpfenden Mittel nicht verunreinigt sind, über die geräuschdämpfenden Mittel (3) verbunden;
h) die beiden Teilkanäle (10, 9, 8, 4) und der die beiden Teilkanäle (10, 9, 8, 4) verbindende Teil der geräuschdämpfenden Mittel (3) sind so angeordnet, daß dieser Teil der geräuschdämpfenden Mittel (3) bei Beaufschlagung mit einem Staudruck eine direkte Verbindung zwischen den beiden Teilkanälen (10, 9, 8, 4) freigibt.

2. Druckluft-Entlüftungseinrichtung mit folgenden Merkmalen:
a) es ist ein Gehäuse (1, 2, 19, 17, 5) mit einem Einlaß (18) und einem Auslaß (4) vorgesehen;
b) im Gehäuse (1, 2, 19, 17, 5) sind geräuschdämpfende Mittel (3) vorgesehen;
c) die geräuschdämpfenden Mittel (3) sind zwischen dem Einlaß (18) und dem Auslaß (4) im Gehäuse (1, 2, 19, 17, 5) angeordnet;
d) parallel zu einem vom Einlaß (18) über die geräuschdämpfenden Mittel (3) zum Auslaß (4) geführten Hauptluftweg ist ein Hilfsluftweg (10, 9, 4) vorgesehen;
e) der Hilfsluftweg (10, 9, 4) besteht aus einem vom Einlaß (18) ausgehenden ersten Teilkanal (10, 9) und einem vom Auslaß (4) gebildeten oder zum Auslaß (4) führenden zweiten Teilkanal (4);
f) die beiden Teilkanäle (10, 9, 4) sind nicht mit dem geräuschdämpfenden Mittel (3) gefüllt.
gekennzeichnet durch die folgenden Merkmale:
g) die beiden Teilkanäle (10, 9, 4) sind miteinander ausschließlich im Normalbetrieb, d.h. wenn die geräuschdämpfenden Mittel nicht verunreinigt sind, über die geräuschdämpfenden Mittel (3) verbunden;
h) der mit dem Einlaß (18) verbundene Teilkanal (10, 9) ist über ein gegen eine Rückstellkraft in Richtung zur Atmosphäre hin in die Offenstellung bringbares Ventil oder eine Sollbruchstelle (24) in der Gehäusewand oder eine umlaufende Dichtlippe (25) mit der Atmosphäre verbindbar.

3. Druckluft-Entlüftungseinrichtung nach einem der vorhergehenden Ansprüche 1 oder 2, dadurch gekennzeichnet, daß einer der beiden Teilkanäle (10, 9, 8, 4) von dem zugeordneten Einlaß (18) gebildet wird.

4. Druckluft-Entlüftungseinrichtung nach einen der vorhergehenden Ansprüche 1 oder 2, dadurch gekennzeichnet, daß einer der beiden Teilkanäle (10, 9, 8, 4) von einer Kammer (8) und einem an diese anschließenden, die Kammer (8) mit dem Einlaß (18) verbindenden Kanal (9) gebildet wird.

5. Druckluft-Entlüftungseinrichtung nach Anspruch 4, dadurch gekennzeichnet, daß die Kammer (8) einerseits von einem Teil der äußeren Oberfläche der geräuschdämpfenden Mittel (3) und andererseits von der diesem Teil gegenüberliegenden Wand des Gehäuses (1, 2, 19, 17, 5) begrenzt wird.

6. Druckluft-Entlüftungseinrichtung nach Anspruch 4, dadurch gekennzeichnet, daß der Kanal (9) einerseits von der den Einlaß (18) aufweisenden Wand (19) des Gehäuses (1, 2, 19, 17, 5) und andererseits von der dieser Wand (19) des Gehäuses (1, 2, 19, 17, 5) zugewandten äußeren Oberfläche der geräuschdämpfenden Mittel (3) begrenzt wird.

7. Druckluft-Entlüftungseinrichtung nach Anspruch 4, dadurch gekennzeichnet, daß die Kammer (8) sich in Richtung der Längsachse des Gehäuses (1, 2, 19, 17, 5) von dem Kanal (9) ausgehend nur über einen Teil der axialen Erstreckung der geräuschdämpfenden Mittel (3) erstreckt.

8. Druckluft-Entlüftungseinrichtung nach Anspruch 4 dadurch gekennzeichnet, daß die Kammer (8) so zu den geräuschdämpfenden Mitteln (3) angeordnet ist, daß die vom Einlaß (18) über den quer zur Längsachse des Gehäuses (1, 2, 19, 17, 5) verlaufenden Kanal (9) in die Kammer (8) einströmende Druckluft quer zur Längsachse des Gehäuses (1, 2, 19, 17, 5) in die geräuschdämpfenden Mittel (3) eintritt und durch diese hindurch zum Auslaß (4) des Gehäuses (1, 2, 19, 17, 5) strömt.

9. Druckluft-Entlüftungseinrichtung nach wenigstens einem der vorhergehenden Ansprüche, gekennzeichnet durch die folgenden Merkmale:
a) auf der den geräuschdämpfenden Mitteln (3) zugewandten Seite des Gehäuses (1, 2, 19, 17, 5) ist ein den Einlaß (18) umgebender ringförmiger Vorsprung (20) vorgesehen, welcher sich in Richtung auf die geräuschdämpfenden Mittel (3) zu erstreckt;
b) auf der den geräuschdämpfenden Mitteln (3) zugewandten Seite des Gehäuses (1, 2, 19, 17, 5) sind quer zur Längsachse des Gehäuses (1, 2, 19, 17, 5) verlaufende Rippen (22, 23) vorgesehen, welche sich von dem ringförmigen Vorsprung (20) ausgehend in Richtung auf den Randbereich (5) des Gehäuses (1, 2, 19, 17, 5) zu erstrecken;
c) von den einander zugewandten Seiten der Rippen (22, 23) wird der Kanal (9) begrenzt;
d) auf der den geräuschdämpfenden Mitteln (3) zugewandten Seite des ringförmigen Vorsprungs (20) ist im Vorsprung (20) ein Durchlaß (10) vorgesehen, über welchen der Kanal (9) mit dem Einlaß (18) verbunden ist.

10. Druckluft-Entlüftungseinrichtung nach Anspruch 9, dadurch gekennzeichnet, daß die dem Einlaß (18) abgewandte Seite der den Einlaß (18) begrenzenden Wand bzw. die dem Einlaß (18) abgewandte Seite des ringförmigen Vorsprungs (20) eine schräg zur Längsachse des Gehäuses (1, 2, 19, 17, 5) verlaufende Ausnehmung (11) aufweist, über welche der Kanal (9) mit dem Durchlaß (10) verbunden ist.

11. Druckluft-Entlüftungseinrichtung nach wenigstens einem der vorhergehenden Ansprüche, dadurch gekennzeichnet, daß die den Einlaß (18) begrenzende Wand bzw. die dem Einlaß (18) zugewandte Seite des ringförmigen Vorsprungs (20) eine schräg zur Längsachse des Gehäuses (1, 2, 19, 17, 5) verlaufende Ausnehmung (12) aufweist, über welche der Einlaß (18) mit dem Durchlaß (10) verbunden ist.

12. Druckluft-Entlüftungseinrichtung nach den Ansprüchen 10 und 11, dadurch gekennzeichnet, daß die Ausnehmungen (11, 12) in Richtung auf den Gehäuseinnenraum zu aufeinander zu verlaufen.

13. Druckluft-Entlüftungseinrichtung nach wenigstens einem der vorhergehenden Ansprüche, dadurch gekennzeichnet, daß das Gehäuse (1, 2, 19, 17, 5) aus einem topfförmig ausgebildeten ersten Gehäuseteil (1, 2) und einem als ein deckelartiges Teil ausgebildeten zweiten Gehäuseteil (19, 17, 5) besteht, wobei das deckelartige Teil (19, 17, 5) einen Rand (5) aufweist, welcher den freien Endbereich des topfförmigen Gehäuseteiles übergreift.

14. Druckluft-Entlüftungseinrichtung nach wenigstens einem der vorhergehenden Ansprüche, dadurch gekennzeichnet, daß der Auslaß (4) quer zum Einlaß (18) in der Wand des Gehäuses (1, 2, 19, 17, 5) angeordnet ist.

15. Druckluft-Entlüftungseinrichtung nach Anspruch 4, dadurch gekennzeichnet, daß die Kammer (8) als eine Ringkammer ausgebildet ist, welche von der äußeren Oberfläche der geräuschdämpfenden Mittel (3) und der dieser gegenüberliegenden Wand des Gehäuses (1, 2, 19, 17, 5) begrenzt wird.

16. Druckluft-Entlüftungseinrichtung nach Anspruch 4, dadurch gekennzeichnet, daß mehrere Kanäle (9) und Durchlässe (10) vorgegeben sind.

17. Druckluft-Entlüftungseinrichtung nach wenigstens einem der vorhergehenden Ansprüche, dadurch gekennzeichnet, daß mehrere Kammern (8) vorgesehen sind, die um den Umfang der geräuschdämpfenden Mittel herum im Gehäuse (1, 2, 19, 17, 5) angeordnet sind, wobei die Kammern (8) von der äußeren Oberfläche der geräuschdämpfenden Mittel (3) und von der dieser zugewandten Seite der Wand (1) des Gehäuses (1, 2, 19, 17, 5) begrenzt werden.

## Claims

1. A compressed air venting device having the following features:
a) a housing (1, 2, 19, 17, 5) having an inlet (18) and an outlet (4) is provided;
b) noise-suppressing means (3) are provided in the housing (1, 2, 19, 17, 5);
c) the noise-suppressing means (3) are arranged between the inlet (18) and the outlet (4) in the housing (1, 2, 19, 17, 5);
d) parallel to a main venting path lead from the inlet (18) by way of the noise-suppressing means (3) to the outlet (4) there is provided a secondary venting path (10, 9, 8, 4);
e) the secondary venting path (10, 9, 8, 4) consists of a first part-channel (10, 9, 8) starting from the inlet (18) and a second part-channel (4) formed by the outlet (4) or leading to the outlet (4);
f) the two part-channels (10, 9, 8, 4) are not filled with the noise-suppressing means (3);
characterized by the following features:
g) the two part-channels (10, 9, 8, 4) are connected to one another exclusively in normal operation, that is, when the noise-suppressing means are not dirty, by way of the noise-suppressing means (3);
h) the two part-channels (10, 9, 8, 4) and the part of the noise-suppressing means (3) connecting the two part-channels (10, 9, 8, 4) are arranged so that this part of the noise-suppressing means (3), when acted upon by back pressure, unblocks a direct connection between the two part-channels (10, 9, 8, 4).

2. A compressed air venting arrangement having the following features:
a) a housing (1, 2, 19, 17, 5) having an inlet (18) and an outlet (4) is provided;
b) noise-suppressing means (3) are provided in the housing (1, 2, 19, 17, 5);
c) the noise-suppressing means (3) are arranged between the inlet (18) and the outlet (4) in the housing (1, 2, 19, 17, 5);
d) parallel to a main venting path lead from the inlet (18) by way of the noise-suppressing means (3) to the outlet (4) there is provided a secondary venting path (10, 9, 4);
e) the secondary venting path (10, 9, 4) consists of a first part-channel (10, 9) starting from the inlet (18) and a second part-channel (4) formed by the outlet (4) or leading to the outlet (4);
f) the two part-channels (10, 9, 4) are not filled with the noise-suppressing means (3);
characterized by the following features:
g) the two part-channels (10, 9, 4) are connected to one another exclusively in normal operation, that is, when the noise-suppressing means are not dirty, by way of the noise-suppressing means (3);
h) the part-channel (10, 9 ) connected to the inlet (18) is arranged to be connected to the atmosphere by way of valve which can be brought in the direction towards the atmosphere into the open position against a restoring force, or by way of a rupture place (24) in the housing wall or by way of a circumferential sealing lip (25).

3. A compressed air venting device according to one of the preceding claims 1 and 2, characterized in that one of the two part-channels (10, 9, 8, 4) is formed by the associated inlet (18).

4. A compressed air venting device according to one of the preceding claims 1 and 2, characterized in that one of the two part-channels (10, 9, 8, 4) is formed by a chamber (8) and a channel (9) adjoining this chamber (8) and connecting the chamber (8) to the inlet (18).

5. A compressed air venting device according to claim 4, characterized in that the chamber (8) is bounded on one side by a part of the outer surface of the noise-suppressing means (3) and on the other side by the wall of the housing (1, 2, 19, 17, 5) lying opposite that part.

6. A compressed air venting device according to claim 4, characterized in that the channel (9) is bounded on one side by the wall (19) of the housing (1, 2, 19, 17, 5) having the inlet (18) and on the other side by the outer surface of the noise-suppressing means (3) facing this wall (19) of the housing (1, 2, 19, 17, 5).

7. A compressed air venting device according to claim 4, characterized in that the chamber (8) extends in the direction of the longitudinal axis of the housing (1, 2, 19, 17, 5), starting from the channel (9), only for part of the axial extent of the noise-suppressing means (3).

8. A compressed air venting device according to claim 4, characterized in that the chamber (8) is arranged with respect to the noise-suppressing means (3) so that the compressed air flowing from the inlet (18) by way of the channel (9) running transversely to the longitudinal axis of the housing (1, 2, 19, 17, 5) into the chamber (8) enters the noise-suppressing means (3) transversely to the longitudinal axis of the housing (1, 2, 19, 17, 5) and flows right through the noise suppressing means to the outlet (4) of the housing (1, 2, 19, 17, 5).

9. A compressed air venting device according to at least one of the preceding claims, characterized by the following features:
a) on the side of the housing (1, 2, 19, 17, 5) facing the noise-suppressing means (3), surrounding the inlet (18) there is provided an annular projection (20) which extends in the direction towards the noise-suppressing means (3);
b) on the side of the housing (1, 2, 19, 17, 5) facing the noise-suppressing means (3) there are provided ribs (22, 23) running transversely to the longitudinal axis of the housing (1, 2, 19, 17, 5), which ribs, starting from the annular projection (20), extend towards the edge region (5) of the housing (1, 2, 19, 17, 5);
c) the channel (9) is bounded by the sides facing one another of the ribs (22, 23);
d) on the side of the annular projection (20) facing the noise-suppressing means (3), in the projection (20) there is provided a duct (10) by means of which the channel (9) is connected to the inlet (18).

10. A compressed air venting device according to claim 9, characterized in that the side remote from the inlet (18) of the wall bounding the inlet (18) and the side remote from the inlet (18) of the annular projection (20) has a recess (11) running obliquely to the longitudinal axis of the housing (1, 2, 19, 17, 5) by means of which the channel (9) is connected to the duct (10).

11. A compressed air venting device according to at least one of the preceding claims, characterized in that the wall bounding the inlet (18) or the side of the annular projection (20) facing the inlet (18) has a recess (12) running obliquely with respect to the longitudinal axis of the housing (1, 2, 19, 17, 5) by which the inlet (18) is connected to the duct (10).

12. A compressed air venting device according to claims 10 and 11, characterized in that the recesses (11, 12) run in the direction of the inside of the housing, converging towards one another.

13. A compressed air venting device according to at least one of the preceding claims, characterized in that the housing (1, 2, 19, 17, 5) consists of a first housing part (1, 2) of cup-shaped construction and a second housing part (19, 17, 5) constructed as a cover-like part, the cover-like part (19, 17, 5) having a rim (5) which engages over the free end region of the cup-shaped housing part.

14. A compressed air venting device according to at least one of the preceding claims, characterized in that the outlet (4) is arranged transversely to the inlet (18) in the wall of the housing (1, 2, 19, 17, 5).

15. A compressed air venting device according to claim 4, characterized in that the chamber (8) is in the form of an annular chamber which is bounded by the outer surface of the noise-suppressing means (3) and the wall of the housing (1, 2, 19, 17, 5) lying opposite the noise-suppressing means.

16. A compressed air venting device according to claim 4, characterized in that several channels (9) and ducts (10) are provided.

17. A compressed air venting device according to at least one of the preceding claims, characterized in that several chambers (8) which are arranged around the circumference of the noise-suppressing means in the housing (1, 2, 19, 17, 5) are provided, these chambers (8) being bounded by the outer surface of the noise-suppressing means (3) and by the side of the wall (1) of the housing (1, 2, 19, 17, 5) facing the noise-suppressing means.

## Revendications

1. Dispositif d'échappement d'air comprimé comportant les éléments suivants :
a) il est prévu un boîtier (1, 2, 19, 17, 5) comprenant une entrée (18) et une sortie (4) ;
b) dans le boîtier (1, 2, 19, 17, 5) sont prévus des organes d'amortissement sonore (3) ;
c) les organes d'amortissement sonore (3) sont agencés entre l'entrée (18) et la sortie (4) dans le boîtier (1, 2, 19, 17, 5) ;
d) parallèlement à un trajet d'air principal menant depuis l'entrée (18) à travers les organes d'amortissement sonore (3) jusqu'à la sortie (4), est prévu un trajet d'air auxiliaire (10, 9, 8, 4) ;
e) le trajet d'air auxiliaire (10, 9, 8, 4) est constitué par un premier canal partiel (10, 9, 8) partant de l'entrée (18) et par un second canal partiel (4) formé par la sortie (4) ou menant à la sortie (4) ;
f) les deux canaux partiels (10, 9, 8, 4) ne sont pas remplis des organes d'amortissement sonore (3) ;
caractérisé par les éléments suivants :
g) les deux canaux partiels (10, 9, 8, 4) sont reliés l'un à l'autre via les organes d'amortissement sonore (3) exclusivement pendant le fonctionnement normal, c'est-à-dire lorsque les organes d'amortissement sonore ne sont pas encrassés ;
h) les deux canaux partiels (10, 9, 8, 4) et la partie des organes d'amortissement sonore (3) qui relie les deux canaux partiels (10, 9, 8, 4) sont réalisés de telle sorte que cette partie des organes d'amortissement sonore (3) libère une liaison directe entre les deux canaux partiels (10, 9, 8, 4) lors de la sollicitation par une pression dynamique.

2. Dispositif d'échappement d'air comprimé comprenant les éléments suivants :
a) il est prévu un boîtier (1, 2, 19, 17, 5) comportant une entrée (18) et une sortie (4) ;
b) dans le boîtier (1, 2, 19, 17, 5) sont prévus des organes d'amortissement sonore (3) ;
c) les organes d'amortissement sonore (3) sont agencés entre l'entrée (18) et la sortie (4) dans le boîtier (1, 2, 19, 17, 5) ;
d) parallèlement à un trajet d'air principal mené depuis l'entrée (18) à travers les organes d'amortissement sonore (3) jusqu'à la sortie (4), est prévu un trajet d'air auxiliaire (10, 9, 8, 4) ;
e) le trajet d'air auxiliaire (10, 9, 8, 4) est constitué par un premier canal partiel (10, 9, 8) partant de l'entrée (18) et par un second canal partiel (4) formé par la sortie (4) ou menant à la sortie (4) ;
f) les deux canaux partiels (10, 9, 8, 4) ne sont pas remplis des organes d'amortissement sonore (3) ;
caractérisé par les éléments suivants :
g) les deux canaux partiels (10, 9, 8, 4) sont reliés l'un à l'autre via les organes d'amortissement sonore (3) exclusivement pendant le fonctionnement normal, c'est-à-dire que les organes d'amortissement sonore ne sont pas encrassés ;
h) le canal partiel (10, 9) relié à l'entrée (18) peut être relié à l'atmosphère via une soupape qui peut être amenée en position ouverte en direction de l'atmosphère à l'encontre d'une force de rappel, ou via un emplacement destiné à la rupture (24) dans la paroi de boîtier ou une lèvre périphérique d'étanchéité (25).

3. Dispositif d'échappement d'air comprimé selon l'une ou l'autre des revendications précédentes 1 et 2, caractérisé en ce que l'un des deux canaux partiels (10, 9, 8, 4) est formé par l'entrée associée (18).

4. Dispositif d'échappement d'air comprimé selon l'une ou l'autre des revendications précédentes 1 et 2, caractérisé en ce que l'un des deux canaux partiels (10, 9, 8, 4) est formé par une chambre (8) et par un canal qui se raccorde à celle-ci et qui relie la chambre (8) à l'entrée (18).

5. Dispositif d'échappement d'air comprimé selon la revendication 4, caractérisé en ce que la chambre (8) est délimitée d'une part par une partie de la surface extérieure des organes d'amortissement sonore (3) et d'autre part par la paroi du boîtier (1, 2, 19, 17, 5) qui est située à l'opposé de cette partie.

6. Dispositif d'échappement d'air comprimé selon la revendication 4, caractérisé en ce que le canal (9) est délimité d'une part par la paroi (19) du boîtier (1, 2, 19, 17, 5), qui présente l'entrée (18), et d'autre part par la surface extérieure des organes d'amortissement sonore (3), qui est orientée vers cette paroi (19) du boîtier (1, 2, 19, 17, 5).

7. Dispositif d'échappement d'air comprimé selon la revendication 4, caractérisé en ce que la chambre (8) s'étend en direction de l'axe longitudinal du boîtier (1, 2, 19, 17, 5) en partant du canal (9) seulement sur une partie de l'étendue axiale des organes d'amortissement sonore (3).

8. Dispositif d'échappement d'air comprimé selon la revendication 4, caractérisé en ce que la chambre (8) est agencée de telle sorte par rapport aux organes d'amortissement sonore (3), que l'air comprimé qui s'écoule depuis l'entrée (18), via le canal (9) s'étendant transversalement à l'axe longitudinal du boîtier (1, 2, 19, 17, 5), jusque dans la chambre (8), pénètre transversalement à l'axe longitudinal du boîtier (1, 2, 19, 17, 5) dans les organes d'amortissement sonore (3), et s'écoule à travers ceux-ci vers la sortie (4) du boîtier (1, 2, 19, 17, 5).

9. Dispositif d'échappement d'air comprimé selon l'une quelconque au moins des revendications précédentes, caractérisé par les éléments suivants :
a) il est prévu, sur la face du boîtier (1, 2, 19, 17, 5) qui est orientée vers les organes d'amortissement sonore (3), une saillie annulaire (20) entourant l'entrée (18), qui s'étend en direction des organes d'amortissement sonore (3) ;
b) il est prévu, sur la face du boîtier (1, 2, 19, 17, 5) qui est orientée vers les organes d'amortissement sonore (3), des nervures (22, 23) s'étendant transversalement à l'axe longitudinal du boîtier (1, 2, 19, 17, 5), qui s'étendent en partant de la saillie annulaire (20) en direction de la région de bordure (5) du boîtier (1, 2, 19, 17, 5) ;
c) le canal (9) est délimité par les faces des nervures (22, 23), qui sont orientées les unes vers les autres ;
d) il est prévu dans la saillie (20) sur la face de la saillie annulaire (20), qui est orientée vers les organes d'amortissement sonore (3), un passage (10) via lequel le canal (9) est relié à l'entrée (18).

10. Dispositif d'échappement d'air comprimé selon la revendication 9, caractérisé en ce que la face de la paroi délimitant l'entrée qui est détournée de l'entrée (18), ou la face de la saillie annulaire (20) qui est détournée de l'entrée (18), présente un évidement (11) s'étendant en oblique par rapport à l'axe longitudinal du boîtier (1, 2, 19, 17, 5), via lequel le canal (9) est relié au passage (10).

11. Dispositif d'échappement d'air comprimé l'une quelconque au moins des revendications précédentes, caractérisé en ce que la face de la paroi délimitant l'entrée qui est détournée de l'entrée (18), ou la face de la saillie annulaire (20) qui est détournée de l'entrée (18), présente un évidement (12) s'étendant en oblique par rapport à l'axe longitudinal du boîtier (1, 2, 19, 17, 5), via lequel l'entrée (18) est reliée au passage (10).

12. Dispositif d'échappement d'air comprimé selon l'une ou l'autre des revendications 10 et 11, caractérisé en ce que les évidements (11, 12) s'étendent l'un vers l'autre en direction de l'intérieur du boîtier.

13. Dispositif d'échappement d'air comprimé l'une quelconque au moins des revendications précédentes, caractérisé en ce que le boîtier (1, 2, 19, 17, 5) est constitué par une première partie de boîtier réalisée en forme de pot (1, 2) et par une seconde partie de boîtier réalisée en forme de couvercle (19, 17, 5), la partie en forme de couvercle (19, 17, 5) présentant une bordure (5) qui recouvre la région finale libre de la partie du boîtier en forme de pot.

14. Dispositif d'échappement d'air comprimé l'une quelconque au moins des revendications précédentes, caractérisé en ce que la sortie (4) est agencée transversalement à l'entrée (18) dans la paroi du boîtier (1, 2, 19, 17, 5).

15. Dispositif d'échappement d'air comprimé selon la revendication 4, caractérisé en ce que la chambre (8) est réalisée sous la forme d'une chambre annulaire qui est délimitée par la surface extérieure des organes d'amortissement sonore (3) et par la paroi du boîtier (1, 2, 19, 17, 5) qui est située à l'opposé de celle-ci.

16. Dispositif d'échappement d'air comprimé selon la revendication 4, caractérisé en ce qu'il est prévu plusieurs canaux (9) et passages (10).

17. Dispositif d'échappement d'air comprimé selon l'une quelconque au moins des revendications précédentes, caractérisé en ce qu'il est prévu plusieurs chambres (8) qui sont agencées autour de la périphérie des organes d'amortissement sonore dans le boîtier (1, 2, 19, 17, 5), les chambres (8) étant délimitées par la surface extérieure des organes d'amortissement sonore (3) et par la face de la paroi (1) du boîtier (1, 2, 19, 17, 5), qui est orientée vers cette surface extérieure.
